# EUROPEAN PATENT SPECIFICATION

(11) **EP 3 214 947 B1**
(45) Date of publication and mention of the grant of the patent: **09.10.2024**
(21) Application number: 15808115.8
(22) Date of filing: 03.11.2015
(51) Int. Cl.: A23K 50/45, A23K 40/25, A23K 20/105

(54) **EXTRUDED PET FOOD PRODUCT FOR REDUCING ORAL PLAQUE**
EXTRUDIERTES TIERNAHRUNGSMITTEL ZUR REDUZIERUNG VON MUNDPLAQUE
PRODUIT ALIMENTAIRE EXTRUDÉ POUR ANIMAUX DE COMPAGNIE POUR RÉDUIRE LA PLAQUE BUCCALE

(30) Priority: 04.11.2014 EP 14306762
(43) Date of publication of application: 13.09.2017
(73) Proprietor: Mars, Incorporated, McLean, VA 22101 (US)
(72) Inventor: DANSET, Gaetan, 30470 Aimargues (FR); DRELON, Nicolas, 30470 Aimargues (FR); ECOCHARD, Claude, 30470 Aimargues (FR); MARIANI, Claire, 30470 Aimargues (FR)
(74) Representative: Cabinet Nony
(86) International application number: PCT/EP2015/075643
(87) International publication number: WO 2016/071367

(56) References cited:
- WO-A1-2012/018913
- WO-A1-2014/155113
- GB-A- 1 456 433
- US-A- 4 022 915
- US-A- 4 330 562
- US-A1- 2012 237 648

## Description

The present disclosure describes an extruded pet food product for use in pet animal health. The present disclosure describes an extruded packaged pet food product containing from over 15% to 30% moisture, from 11 % up to 45% carbohydrate, fat and protein, an a_{w} of over 0.7, for use in pet animal health. The disclosure also describes a method of health in an animal, the method comprising feeding an extruded packaged pet food product containing from over 15% to 30% moisture, from 11% up to 45% carbohydrate, an a_{w} of over 0.9, and a density in the range of 250 to 300 g/I to a pet animal.

There is a general need in the art to provide pet food products for use in pet animal health.

The present disclosure addresses this. Further the product of the present disclosure is a natural product, as no additional ingredients are used to create the achieved effect and none of the negative associations with known solutions are needed.

Accordingly, the present invention provides an extruded packaged pet food product containing from over 15% to 30% moisture, from 11% up to 45% carbohydrate, fat and protein, an a_{w} of over 0.7, and a density in the range of 250 to 300 g/l, in pet animal health for reducing oral plaque.

The extruded product may have no ingredient applied after extrusion. In the prior art, extruded food products have conventionally been coated after drying with fat such as chicken, pork, lard, copra oil in order to increase palatability and energy supply. Extruded pet food has also been known to be coated with liquid palatants such as digests; solid palatants such as powders and in some cases heat sensitive nutrients are applied to extruded dry pet food for example by coating the pet food with green lipped lipid mussel. The present invention avoids any negative effects of applying specific ingredients after extrusion of pet food, specifically the health benefits are discussed in detail below.

The product may have from 20% to 27% moisture. The product may have 15% to 20% moisture. The product may have about 18% moisture. The product may have from 13% to 17% carbohydrate.

The pet food product is preferably for use in achieving the claimed health in a pet dog or in a pet cat.

The described product may be produced at least in part in the presence of super heated steam. The described product may have an a_{w} of over 0.9 or over 0.92. The product may have an a_{w} of greater than 0.8.

The product may further comprise of an acid, preferably the acid is lactic acid. The acid may be present in the amount of from 0.5 to 10%.

The described food product is packaged. The packaging may be any, preferably a sealed package. The material of the package may be paper, card, plastic or foil and/or may be a tin, screw-topped jar or film pouch pack. The package may be hermetically sealed. One packaging may be vacuum packaging. The described food product may be packaged under aseptic conditions (e.g. in the present of super heated steam) or may be processed to achieve sterile conditions (e.g. by irradiation).

A second aspect of the disclosure which is not claimed, provides a method of health in an animal, the method comprising feeding an extruded packaged pet food product containing from over 15% to 30% moisture, from 11% up to 45% carbohydrate, an a_{w} of over 0.9, and a density in the range of 250 to 300 g/I to a pet animal.

The packaged extruded pet food product feed according to the second aspect of the invention may be produced at least in part in the presence of super heated steam.

All features of the first aspect of the disclosure also applies to the second aspect.

The present disclosure enables a semi-moist pet food product with the moisture levels claimed to be produced and kept in packaging to achieve a long shelf life. One way of obtaining such an extruded pet food product may be by the use of super heated steam. Any process using super heated steam can be used to produce a product according to the present disclosure.

The pet food product is any format as described in the claims and herein. It may be described, but is not claimed, as a kibble, snack, treat or biscuit. The texture of the product is soft. The soft texture may contribute toward the satietogenic effect as it promotes chewing and therefore increases the meal time. This soft texture is unexpectedly obtained in the absence of waterbinders, such as glycerol (used to ensure shelf-life stability). The ability to obtain such a soft texture, in combination with the specified water level and a_{w}, to provide a shelf-stable product contributes to the satiegenic effect obtained. The moisture content and texture of the kibble requires a longer chewing time which may contribute to the health effect.

The pet food product is preferably a commercial pet food product. Such a product is preferably sold as a product to feed to a cat or a dog.

The pet food product of the invention has the following uses (one or more), which are not claimed except reducing oral plaque, in pet animal health:
- oral health benefit (by increasing oral processing); reducing oral plaque
- gastrointestinal (formula, may involve no additional ingredients after extrusion)
- dermatological (less allergens, may involve no additional ingredients after extrusion)
- mobility (weight loss/control)
- renal (low phosphorus, may involve no additional ingredients after extrusion).

The present disclosure avoids any negative effects of using standardised coating agents after extrusion of pet food and this leads to the amelioration of animal health as outlined above. The standard coating agents applied after extrusion often contains a high level of fat. As the present invention avoids the addition of ingredients after extrusion, the claimed pet food contributes to reduced fat intake of the pet which in turn leads to the reduction or treatment of hyperlipidemia pancreatitis and exocrine pancreatic insufficiency.

Hyperlipidemia is a disturbance of lipid metabolism that results in an elevation of lipids in the blood, particularly triglycerides and/or cholesterol. Post prandial hyperlipidemia is a normal, physiological phenomenon, but in a fasted state, hyperlipidemia is an abnormal laboratory finding. Primary causes of hyperlipidemia in dogs and cats are either genetic or familial, while secondary hyperlipidemia is associated with endocrine disorders (ie diabetes mellitus, hypothyroidism, hyperadrenocorticism) or pancreatitis. The most common clinical signs associated with hyperlipidemia include vomiting, diarrhea and abdominal discomfort. Hyperlipidemia that occurs secondary to an underlying metabolic disease generally improves with the treatment of the primary disease. Restriction of dietary fat is the foundation for treatment of hypertriglyceridemia, as chylomicrons (lipoproteins transporting lipids) are produced from dietary fat origin. Low fat diets such as that of the present invention have been shown to improve the lipoproteic profile of Miniature Schnauzers with primary hyperlipidemia (Xenoulis P G et al, Journal of Veterinary Internal Medicine 2011; 25:687 and Xenoulis P G et al, ACVIM Forum Abstract, 2013). Another study (Jeusette I C et al., Am J Vet Res, 2005, 66, 81-6) showed a return to normal of plasma triglycerides and cholesterol of obese dogs fed a low fat diet.

Pancreatitis is an inflammatory infiltration of the pancreas. Acute pancreatitis is inflammation of the pancreas not associated with permanent changes, while the chronic form is associated with pancreatic fibrosis and atrophy. However, chronic pancreatitis is less commonly associated with local and systemic complications and is usually a milder disease process.

Risk factors in dogs include hereditary, hyperlipidemia, drugs, trauma and ischemia. Nutrition -related risk factors include obesity and high fat/low protein diets (Hess et al., J Am Vet Med Assoc, 1999, 214, 46-51 ; and Lem et al., J Am Vet Med Assoc, 2008, 233, 1425-31).

Pancreatitis is generally considered to occur when digestive enzymes are activated prematurely within the pancreas. Experimental pancreatitis can be initiated by hyperstimulation with CCK (Cholecystokinin) analogs. CCK is normally released by cells in the duodenum in response to intraluminal fat and amino-acids. This gut hormone coordinates and stimulates pancreatic secretion and gallbladder contraction during digestion.

Fat restriction is generally recommended in the long term nutritional management of pancreatitic patients (Villaverde C, Applied Veterinary Clinical Nutrition, Fascetti, A J and Delaney S J (eds), 2012), to limit the stimulation of the pancreas through CCK release. Again the pet food product as described in the present invention can be used to reduce fat intake and thereby treat pancreatitis.

Exocrine Pancreatic Insufficiency (EPI) results from a severe loss of pancreatic function. The pancreas is unable to provide enough digestive enzymes, bicarbonate, and other substances for proper digestion and absorption. This results in fat, carbohydrate and protein malassimilation. The main clinical signs observed are chronic diarrhoea, weight loss, and polyphagia (Westermarck E and Wiberg M, Vet Clin North Am Small Anim Pract, 2003, 33, 1165-79, viii-ix). Enzyme supplementation is the mainstay for the therapy of patients with EPI. However, the activity of lipase never reaches levels comparable to healthy animals due to destruction by acid and proteases in the stomach, and many treated patients still have some degree of steatorrhea. Lipase being the limited step in the digestion of fat, which is considered the most difficult nutrient to assimilate, feeding highly digestible, low fat diets is proposed as a strategy to limit fat malabsorption. A study in EPI dogs showed weight gain after a treatment with pancreatic enzymes and a low fat diet (Simpson J W et al., J Small Anim Pract, 1994, 35, 133-138). It is possible to treat animals suffering from EPI by supplying the animal with a diet containing the pet food product of the present invention as it is a low fat alternative to current pet foods available.

Another direct benefit from a reduced total fat intake by animals fed the pet food product of the present disclosure, is an increase in mobility due to a decrease in weight. Obesity is a major risk factor for orthopedic diseases in companion animals, and especially in dogs. This is mainly due to an excessive weight bearing on joints and bones that exacerbates orthopedic diseases. Some studies have highlighted the association between obesity and development of osteoarthritis (Kealy D et al., J Am Vet Med Assoc, 1997, 210, 222-5; and Kealy R D et al., J Am Vet Med Assoc, 2000, 217, 1678-80), whilst weight reduction can lead to a substantial improvement in the degree of lameness in dogs with hip osteoarthritis (Impellizeri J A et al., J Am Vet Med Assoc, 2000, 216, 1089-91).

Another study (Marshall W G et al., Vet Res Commun, 2010, 34, 241-53) assessed the effect of weight loss in 14 dogs with clinical and radiographic signs of osteoarthritis that undertook a 16 weeks weight loss programme. The results indicate that body weight reduction caused a significant decrease in lameness from a weight loss of 6%. This confirms that weight loss should be presented as an important treatment modality of pets suffering from osteoarthritis.

Dietary therapy, with a reduction of energy intake remains the most successful approach to the management of obesity in dogs and cats. Feeding animals diets with a low energy density helps reduce daily calorie intake to achieve a successful weight loss (German A J et al., Res Vet Sci, 2009, 87, 249-54; German A J et al., Vet J, 2010, 183, 294-7; Yamka R M et al., Intern J Appl Res Vet Med, 2007, 5, 125-132; German A J et al., J Feline Med Surg, 2008, 10, 452-9; Hoenig M et al., Am J Physiol Regul Integr Comp Physiol, 2007, 292, R227-34; Bissot T et al., J Feline Med Surg, 2010, 12, 104-12).

Reducing the fat content of a diet decreases the energy density of a food. Fat contains more than twice the calories per gram compared with protein or carbohydrate. Consequently, fat restriction in weight loss diets reduces calorie density, which helps to reduce calorie intake.

Considering that the coating applied after extrusion generally contains a high level of fat, an extruded petfood product with no ingredients applied after extrusion would contribute to a reduction in the total fat content of the pet food and benefit obese pets, including those suffering from osteoarthritis.

Feeding a pet food that does not contain any added ingredients after the extrusion process can lead to other medical benefits such as a decrease in cutaneous adverse food reaction and renal benefits.

Cutaneous Adverse Food Reaction (CAFR), or Food-Induced Atopic Dermatitis, is a pruritic and inflammatory skin condition resulting from oral ingestion of an offending allergen. Food allergens are essentially proteins or glycoproteins, ranging from 10 to 70kd (Hefle S L, Food Technology, 1996, 50, 86-92).

The wall of the digestive tract is the largest surface of the body exposed to the environment and thus to exogenous antigens. The digestive mucosa includes a specific immune system which allows it to react to pathogens (bacteria, viruses, parasites), while the process of oral tolerance (acquired during a young age) normally prevents it from reacting to dietary proteins. A defect in this process will favor the development of allergies.

CAFR therefore develop towards allergens to which the animal has been exposed, meaning proteins the animal has previously been fed. In dogs and cats, these allergens are mainly from animal origin, although they can also be from cereal origin (Verlinden A et al., Crit Rev Food Sci Nutr, 2006, 46, 259-73; Roudebush P et al., Small Animal Clinical Nutrition, 2010, 5th ed Topeka: Mark Morris Institute; Roudebush P, Yet Dermatol, 2013, Letter to the Editor) and Fiora P et al., A retrospective study on the prevelance and causative allergens of food-induced atopic dermatitis in France, Short Communication at ESVD Congress, 2013, Valencia).

The treatment of CAFR is primarily dietary, since it consist of avoiding the offending food allergen, by using either a selected protein diet (protein source which the pet has never been exposed to before) or a hydrolysed protein diet (the native protein is hydrolysed into small peptides which the immune system does not recognize) (Verlinden A et al., Crit Rev Food Sci Nutr, 2006, 46, 259-73).

Flavours used in dry pet foods mostly consist of animal proteins, and although they are generally hydrolyzed, the level of hydrolysis may be not high enough, resulting in peptides which still are recognized by the immune system and may generate CAFR. Therefore, not using flavor on an extruded pet food such as that described in the present invention, would reduce the risk of CAFR.

Chronic Kidney Disease (CKD) ensues from the irreversible loss of the metabolic, endocrine and excretory capacities of the kidney. CKD is a common clinical problem, estimated to affect 2 to 6% of all dogs and cats presented to veterinary practices (Lund E M et al., J Am Vet Med Assoc, 1999, 214, 1336-41 and Bronson R T, Am J Vet Res, 1982 43, 2057-9). CKD is considered as a leading cause of death in older animals. Dietary therapy is considered as a cornerstone of the management of chronic kidney disease, aiming at altering disease progression, controlling uremic symptoms and eventually improving the quality of life. Phosphate retention is one of the most common regulatory derangements of CKD that arises secondary to reduced glomerular filtration of phosphorus. Hyperphosphatemia occur early in CKD and play key roles in the genesis and progression of renal secondary hyperparathyroidism, renal osteo-dystrophy, relative or absolute deficiency of 1 ,25-dihydroxyvitamin D, and soft tissue calcification. High plasma phosphate concentrations have also been associated with shorter survival times in cats with CKD. (Boyd L M et al., J Vet Intern Med, 2008, 22, 1111 -7 and (King J N et al., J Vet Intern Med, 2007, 21 , 906-16). By minimizing hyperphosphatemia early on, secondary hyperparathyroidism and its sequel can be prevented (Finch N C et al., J Am Vet Med Assoc, 2012, 241 ,1326-35).

Dietary phosphate restriction has been shown to slow down the progression of renal failure in dogs (Brown S A and Finco D R, Am J Vet Res, 1992, 53, 569-73 and Finco D R et al., Am J Vet Res, 1992, 53, 2264-71) and cats (Barber P J et al., J Small Anim Prac, 1999, 40, 62-70), lowering plasma parathyroid hormone, decreasing renal mineralization and fibrosis (Ross L A et al., Am J Vet Res, 1982, 43, 1023-6). In cats with CKD, dietary phosphorus restriction was associated with increased survival time (Elliott J et al., J Small Anim Pract, 2000, 41 , 235-42).

Considering that the coating applied after extrusion generally contains a high level of phosphorus, an extruded pet food product with no ingredient applied after extrusion as described in the present disclosure, would contribute to reduce the total phosphorus content of pet food. Such a process would allow dietary phosphorus restriction that would treat pets suffering from chronic kidney disease.

A typical disclosed pet food contains about 20-30% crude protein and about 10-20% fat, the remainder being carbohydrate, including dietary fibre and ash.

The remaining components of the food are not essential to the invention and typical standard component products can be included. The combined ingredients of the food according to the invention can provide all of the recommended vitamins and minerals for the particular animal in question (a complete and balanced food).

The food is a cooked product, preferably cooked during extrusion. It may incorporate meat or animal derived material (such as beef, chicken, turkey, lamb, fish, blood plasma, marrow bone etc. or one or more thereof). The product alternatively may be meat free (preferably including a meat substitute such as soya, maize gluten or a soya product) in order to provide a protein source. The foodstuff may contain additional protein sources such as soya protein concentrate, milk proteins, gluten etc. The foodstuff may also contain a starch source such as one or more grains (e.g. wheat, corn, rice, oats, barley etc.). The product preferably contains at least one fibre source.

It is common knowledge in the art to produce a product using super heated steam. Such methods are well known and are described in earlier documents such as WO 2009/018990, WO 2009/018996, WO 2009/018997, WO 2010/112097 and WO 2010/108641.

The product being produced at least in part in the presence of super heated steam includes one or more of the following:
The disclosed extruded product is packaged by providing a gaseous atmosphere with super heated steam in a housing, supplying the product to the gaseous atmosphere, delivering the packaging to the gaseous atmosphere, filling the product into the packaging, sealing the packaging inside the gaseous atmosphere and moving the filled packaging out of the gaseous atmosphere. The temperature of the gaseous atmosphere may be more than 100°C, 120°C, 140°C, 160°C, 180°C or 220°C. The gaseous atmosphere may be at ambient pressure, reduced pressure or elevated pressure. The gaseous atmosphere may be a mixture of a first component, consisting of air and/or another gas, and water vapour as a second component and, at least in a horizontal sublayer, has a steam content of at least 50% by weight, 60% by weight, 70% by weight, 80% by weight, 90% by weight, 95% by weight, 98% by weight, 99% by weight. The gaseous atmosphere in at least one horizontal partial layer may have an oxygen content of less than 15% by volume, 10% by volume, 8% by volume, 5% by volume, 2% by volume or 1 % by volume. The gaseous atmosphere may be stratified in the vertical direction, with the temperature rising and the oxygen content dropping, towards the top.

The extruded product may be dried for a predetermined time before packing by dwelling in the gaseous atmosphere. In the process, the volatile substances escaping from the material, especially flavours, may be extracted from the gaseous atmosphere. The gaseous atmosphere present in the housing may be mixed and vertical stratification may be avoided.

The disclosure relates to a product in a packed form in which the food product be cooked, dried and packaged in an atmosphere of super heated steam.

In the prior art, food products have conventionally been dried down to an a_{w} value (active water content) of about 0.60 or 0.65. The reason for such drying is that higher a_{w} values were understood to lead to uncontrolled growth of any micro-organisms remaining in the product, such as bacteria, fungi, yeast etc. A reduction of pH can also be used to control the growth of spore forming bacteria. Reduction of pH below 4.5 can be achieved by the addition of acid, including lactic acid. The pH reduction can be obtained by acidification of the dry mix during the extrusion process.

More recent studies have shown that substantially less extensive drying of moist products may be sufficient, under certain circumstances, to obtain packaged products with satisfactory long-term storage stability. When a food product is dried in an atmosphere of super heated steam containing less than 3% O₂ and at a temperature of at least 120°C to an a_{w} value of 0.9 at most or up to 0.92, any surviving micro-organisms are unable to grow provided the product is hermetically packaged while it is still in the atmosphere of super heated steam with an oxygen content of no more than 3% by volume.

A method of producing a packed food product in the presence of super heated steam may comprise cooking a food product at a cooking temperature of at least 100°C, introducing the cooked food product into an atmosphere of super heated steam, the atmosphere of super heated steam containing less than 3% of oxygen and having a temperature of at least 120°C, drying the food product to an a_{w} value in the range of from 0.7 to 0.92 and, in the super heated steam atmosphere, packaging the food product in a packaging container. The packaging container may then be hermetically sealed.

The super heated steam atmosphere during the process may be maintained at a temperature of at least 130°C. The food product may be cooked in water, saturated steam or super heated steamr a mixture. The food may be cooked in an extruder and may be directly extruded to the atmosphere of super heated steam.

According to the super heated process, the food product may be dried during a drying time of at least 20 seconds, 30 seconds, forty seconds, one minute, two minutes, five minutes or ten minutes. The food product may be pasteurised by drying for at least five minutes or at least ten minutes.

The cooked and dried food product may be packaged without addition of any ingredient, including any preservative. During the packaging process, the packaging container may have a protective gas fed in during the packaging.

The temperature of the food product may be maintained at 100°C or above between cooking the food product and sealing the packaging container. The food may be cooked while being extruded. The atmosphere of super heated steam may be maintained at an atmospheric pressure. The protective gas case may be C0₂ or N₂.

The process of producing the product in the presence of super heated steam may include a method for deep frying foods in which the food is delivered to hot oil or fat and transported out of the hot oil after a predetermined residence time, wherein a steam zone with super heated steam is generated above a free surface of the oil which shields the oil from the ambient air and from which a flow of steam corresponding to an amount of water evaporating from the deep fried foods is withdrawn. The super heated steam may be circulated, in the course of which the steam is extracted from the steam zone, optionally passed through a heat exchanger and returned to the steam zone by a fan. The steam may be blown onto or across the free surface. A volume of steam present or circulating in the steam zone may be kept constant. An oxygen content in the steam zone over the oil may be kept to less than 10% by volume, 5% by volume, 3% by volume, 2% by volume or 1% by volume. The flow of steam may be at least partially condensed and the energy and/or material may be recovered, especially in order to heat the oil. The invention may include, in the super heated steam process, a method of drying an extruded material including the steps of providing a gaseous atmosphere with a super heated steam in a housing, extruding a material in the housing, drying the material in the gaseous atmosphere and moving the dried material out of the housing. The temperature of the material when it enters the housing may be more than 100°C, 110°C, 120°C, 130°C or 140°C. The gaseous atmosphere may be at a temperature of more than 100°C, 120°C, 140°C, 160°C, 180°C or 220°C. The gaseous atmosphere may be a mixture of a first component consisting of air and/or another gas, such as C0₂, nitrogen or another inert gas and a water vapour as a second component and has a steam content of at least 50% by weight, 60% by weight, 70% by weight, 80% by weight, 90% by weight, 95% by weight, 98% by weight or 99% by weight.

Volatile substances which escape from the material into the gaseous atmosphere, especially flavours, may be extracted from the gaseous atmosphere. After extraction, the substances may be added to the material again. The substances may be added to the material directly or in the form of a carrier material, such as a coating or filling. The method in the presence of super heated steam may include a method of drying material comprising steps of providing a gaseous atmosphere with super heated steam in a housing, transporting material into the housing, drying the material in a gaseous atmosphere, transporting the dried material out of the housing and extracting from the gaseous atmosphere volatile substances which escape from the material into the gaseous atmosphere, especially flavours.

In terms of shelf stability, the peroxide value of the product is preferably less than 10 mEq/kg fat (Eq is the equivalent to O₂). The Hexanal content is less than 15 ppm. The present invention is described in Figures 1 to 8, in which:
Figure 1 shows the process for producing an extruded package pet food product of the claimed invention.
Figure 2 is a graphical representation of the food intake of Beagle dogs fed either the adult control product or the adult test product. The first, second, third and fourth meal food intake are measured from the bottom of the graph up.
Figure 3 is a graphical representation of the meal consumed by Beagle dogs over a 12 hour period fed either the test food product (SHS) or control food product (Medium). The bars to the left of the pair of bars is the control pet food product (Medium) and the bars on the right are the test pet food product (SHS).
Figure 4 is a graphical representation of the percent amount the Beagle dogs consumed of the test food product (SHS) versus the control food product (Medium).
Figure 5 is a graphical representation of the plaque on the dogs fed either the control food product or the test food product.
Figure 6 is a graphical representation of the percentage of surface plaque at 10 days on the Beagle dogs fed the control product versus the test food product.
Figure 7a and Figure 7b is a graphical representation of the kinetic ingestion of the control pet food product versus the test pet food product in Schnauzer dogs.
Figure 8 shows an image of the control pet food product versus the test food product.

### Example

The present invention can be described with reference to the following non-limiting examples. The scope of protection is defined in the claims.

### Objective

The aim of this trial was to assess the effect of an extruded product according to the invention. The comparison is between a product with the same ingredients produced by different technologies and having the formula as set out below:

| Test Product | | |
|---|---|---|
| | % as fed | g/M cal |
| H2O | 25+/-0.5 | 84,6 |
| PB | 22,27 | 75,4 |
| Fat | 6,55 | 22,2 |
| Crude Fiber | 1,12 | 3,8 |
| TDF | 4,72 | 16,0 |
| Starch | 35,72 | 120,9 |
| Ash | 4,91 | 16,6 |
| Energy URC 2006 (kcal/kg | 2954 | |
| Energy (dry weight) (kcal/kg) | 2741 | |

| Control/Dry Product | | |
|---|---|---|
| | % as fed | g/M cal |
| H2O | 9,5 | 24,6 |
| PB | 25,21 | 65,3 |
| Fat | 13,95 | 36,1 |
| Crude Fiber | 1,25 | 3,2 |
| TDF | 5,26 | 13,6 |
| Starch | 39,37 | 101,9 |
| Ash | 5,61 | 14,5 |
| Energy URC 2006 (kcal/kg) | 3863 | |
| Energy (dry weight) (kcal/kg) | 3625 | |

### Conditions

The test product of the invention was produced using the following process:
Preconditioner settings included a product with 29% moisture.

The product was extruded under a temperature of around 125°C and a pressure of around 20 bar.

The product was extruded into superheated steam atmosphere of between 120 - 140°C.

The product had a round shape, with dimensions of 13 mm, thickness of 7 mm and a die plate which was round, having dimensions of 7.3 mm.

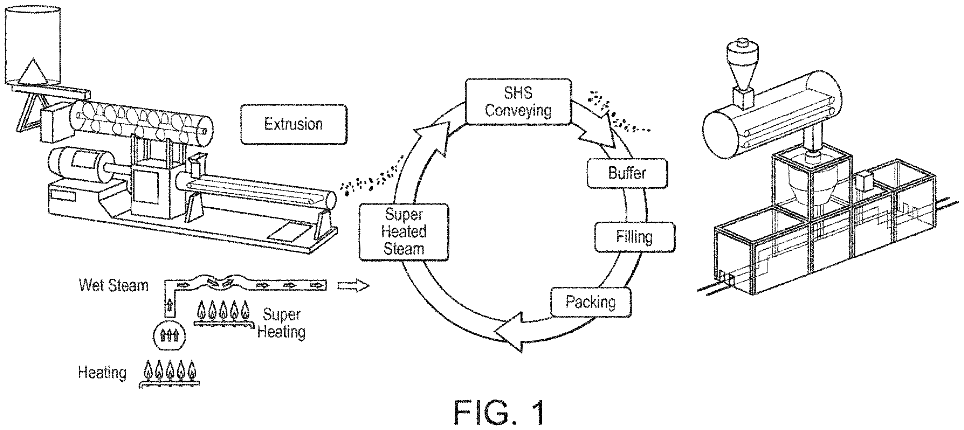

The process is diagrammatically represented in Figure 1.

### Protocol

A two product ranking test was conducted. Two products were used according to the above formula.

The design used for the test was a random crossover test. Each week, dogs had three meals (kinetics) with one of the two diets (the test or the control). The following week, the alternative test or control diet was used.

A description of the test is set out as follows:

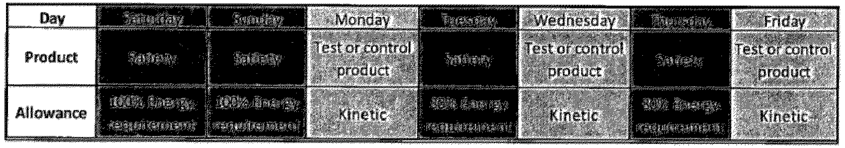

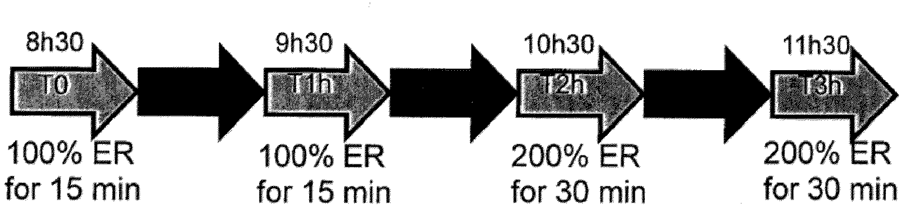

The outcome was that there was a total food intake in kcal/kg⁰⁷⁵ at each kinetic.

The test was carried out on 10 adult Beagle dogs. The dogs had access to unlimited water.

The energy allowance was:
- 120 kcal/kg ^{0,75} corresponds to 100% of the Energy Requirement
- 240 kcal/kg^{0,75} corresponds to 200% of the Energy Requirement

The results also included the fact that in terms of digestibility, neither diarrhoea nor constipation was observed.

### Product Production

The ingredients for the product, as described above were mixed and extruded. For the test product, the product was produced with at least a part of the product being conducted under super heated steam as described above. The control diet was dried and a coating of fat and palatants, typical of a dried kibble added (poultry fat).

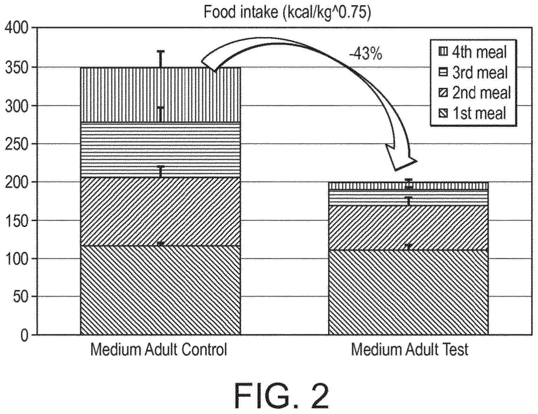

The results are shown in Figure 2.

Figure 2 shows that the test diet is eaten at 43% less than the control diet.

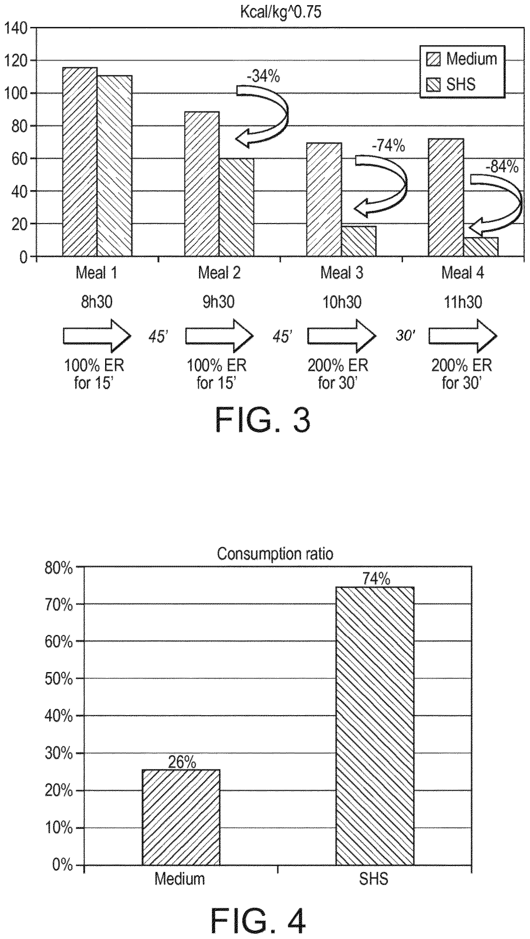

### Further results are seen in Figure 3

Figure 3 shows that the satiety effect appears after the first meal (34% decrease of meal consumption).

### Further results are shown in Figure 4

Figure 4 shows that the superior palatability of the products confirm that the satiety cannot be explained by a less palatable product, but the combination of the low energy diet and a soft texture which tends to increase the time between meals

### Oral Hygiene Test

A two product ranking test was performed with 7 Schnauzer dogs. The dogs were scaled and polished two weeks before the beginning of the study. The dogs were fed the control diet over a 10 day period and then fed the test product for ten days. For both diet periods, the dental plaque deposit was brushed before the first meal and monitored after the meal on day 10 (percentage of surface plaque).

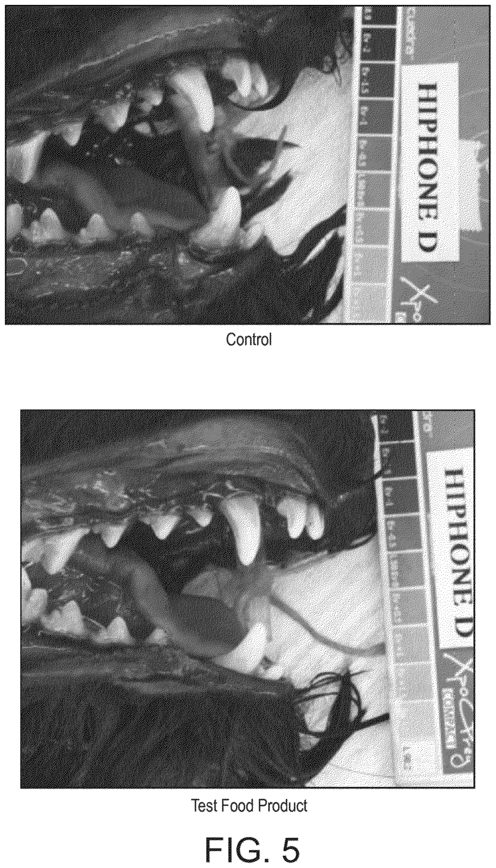

### Further results are shown in Figure 5.

Figure 5 shows a reduction of plaque on the dogs' teeth fed the test product versus the control pet food. The teeth of the dogs fed the control diet had more plaque visible in the photo then what was seen on the teeth of the dogs fed the test diet.

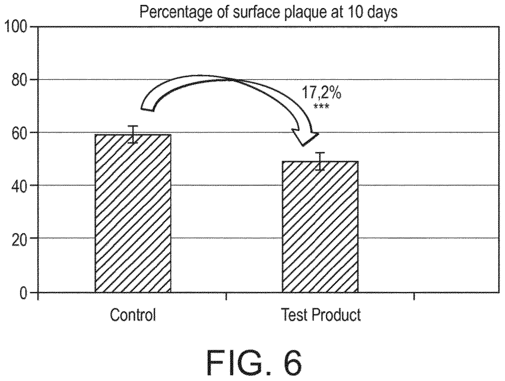

### Further results are shown in Figure 6.

Figure 6 shows significant 17.2% reduction in plaque over 10 days in dogs fed the test pet food product versus the control.

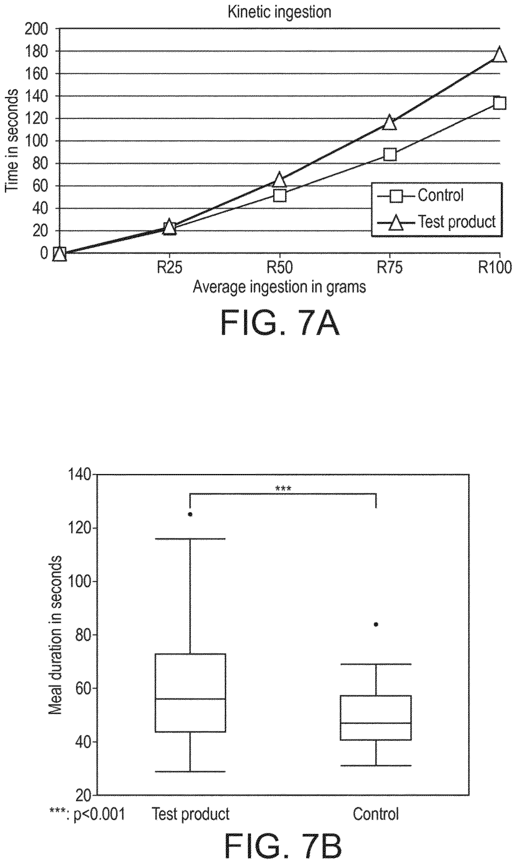

### Further results are shown in Figure 7.

Figure 7 (A) and (B) shows that the dogs fed the test product pet food product versus the control fed dogs took longer to ingest the pet food (significant increase of 19.1 %); thereby increasing the time for mastication and reducing the amount of plaque that forms on the dogs' teeth.

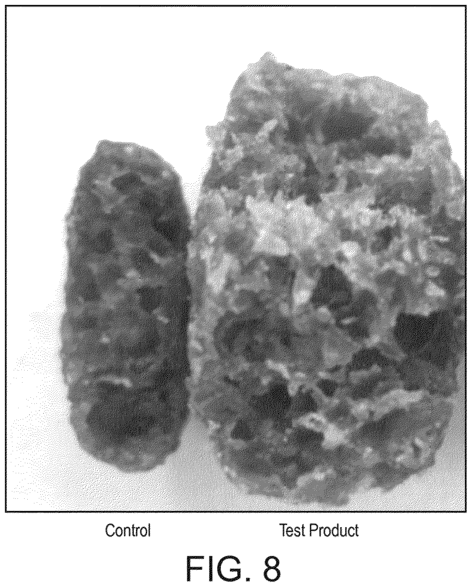

### Further results are shown in Figure 8.

Figure 8 shows the appearance of the test product pet food product versus the control pet food product.

## Claims

1. An extruded packaged pet food product containing from over 15% to 30% moisture, from 11% up to 45% carbohydrate, fat and protein, and an a_{w} of over 0.7, for use in reducing oral plaque.

2. The product for use as claimed in claim 1, wherein the extruded product has no ingredient applied after extrusion.

3. The product for use as claimed in claim 1 or claim 2, wherein the extruded product has from 20% to 27% moisture.

4. The product for use as claimed in claim 1 or claim 2, wherein the extruded product has from 15% to 20% moisture.

5. The product for use as claimed in claim 1 or claim 2, wherein the extruded product has about 18% moisture.

6. The product for use according to any previous claim wherein the a_{w} is greater than 0.8.

7. The product for use according to any previous claim, wherein the pet animal is a cat or a dog.

8. The product for use according to any previous claim, wherein the carbohydrate is present at a level of from 13 to 17%.

9. The product for use according to any previous claim wherein the product further comprises an acid.

10. The product for use according to claim 9, wherein the acid is present in the amount of from 0.5 to 10%.

11. The product for use according to claims 9 to 10 wherein the acid is lactic acid,

## Patentansprüche

1. Extrudiertes verpacktes Haustierfutterprodukt, das über 15 % bis 30 % Feuchtigkeit, 11 % bis 45 % Kohlenhydrat, Fett und Protein enthält und einen a_{w}-Wert von über 0,7 aufweist, zur Verwendung bei der Verringerung von oraler Plaque.

2. Produkt zur Verwendung nach Anspruch 1, wobei das extrudierte Produkt keinen nach der Extrusion aufgebrachten Inhaltsstoff aufweist.

3. Produkt zur Verwendung nach Anspruch 1 oder Anspruch 2, wobei das extrudierte Produkt 20 % bis 27 % Feuchtigkeit aufweist.

4. Produkt zur Verwendung nach Anspruch 1 oder Anspruch 2, wobei das extrudierte Produkt 15 % bis 20 % Feuchtigkeit aufweist.

5. Produkt zur Verwendung nach Anspruch 1 oder Anspruch 2, wobei das extrudierte Produkt etwa 18 % Feuchtigkeit aufweist.

6. Produkt zur Verwendung nach einem der vorhergehenden Ansprüche, wobei der a_{w}-Wert größer als 0,8 ist.

7. Produkt zur Verwendung nach einem der vorhergehenden Ansprüche, wobei das Haustier eine Katze oder ein Hund ist.

8. Produkt zur Verwendung nach einem der vorhergehenden Ansprüche, wobei das Kohlenhydrat in einem Anteil von 13 bis 17 % vorliegt.

9. Produkt zur Verwendung nach einem der vorhergehenden Ansprüche, wobei das Produkt ferner eine Säure umfasst.

10. Produkt zur Verwendung nach Anspruch 9, wobei die Säure in der Menge von 0,5 bis 10 % vorliegt.

11. Produkt zur Verwendung nach den Ansprüchen 9 bis 10, wobei die Säure Milchsäure ist.

## Revendications

1. Produit alimentaire pour animaux domestiques emballé extrudé contenant de plus de 15 % à 30 % d'humidité, de 11 % jusqu'à 45 % de glucide, de graisse et de protéine, et un a_{w} supérieur à 0,7, pour une utilisation dans la réduction de la plaque dentaire.

2. Produit pour une utilisation selon la revendication 1, le produit extrudé n'ayant pas d'ingrédient appliqué après extrusion.

3. Produit pour une utilisation selon la revendication 1 ou la revendication 2, le produit extrudé ayant de 20 % à 27 % d'humidité.

4. Produit pour une utilisation selon la revendication 1 ou la revendication 2, le produit extrudé ayant de 15 % à 20 % d'humidité.

5. Produit pour une utilisation selon la revendication 1 ou la revendication 2, le produit extrudé ayant environ 18 % d'humidité.

6. Produit pour une utilisation selon une quelconque revendication précédente, le a_{w} étant supérieur à 0,8.

7. Produit pour une utilisation selon une quelconque revendication précédente, l'animal domestique étant un chat ou un chien.

8. Produit pour une utilisation selon une quelconque revendication précédente, le glucide étant présent à un taux allant de 13 à 17 %.

9. Produit pour une utilisation selon une quelconque revendication précédente, le produit comprenant en outre un acide.

10. Produit pour une utilisation selon la revendication 9, l'acide étant présent en la quantité allant de 0,5 à 10 %.

11. Produit pour une utilisation selon les revendications 9 à 10, l'acide étant l'acide lactique.
